# EUROPÄISCHE PATENTSCHRIFT

(11) **EP 0 980 125 B1**
(45) Veröffentlichungstag und Bekanntmachung des Hinweises auf die Patenterteilung: **30.08.2006**
(21) Anmeldenummer: 99113507.0
(22) Anmeldetag: 02.07.1999
(51) Int. Cl.: H02B 1/20

(54) **Mehrphasige Stromsammelschiene**
Multiphase power busbar
Jeu de barres omnibus à plusieurs phases

(30) Priorität: 12.08.1998 DE 19836507
(43) Veröffentlichungstag der Anmeldung: 16.02.2000
(73) Patentinhaber: ABB PATENT GmbH, 68526 Ladenburg (DE)
(72) Erfinder: Eppe, Klaus-Peter, Dipl.-Ing., 69429 Waldbrunn (DE); Weber, Ralf, Dipl.-Ing., 69123 Heidelberg (DE); Schick, Peter, Dipl.-Ing., 69118 Heidelberg (DE)
(74) Vertreter: Miller, Toivo

(56) Entgegenhaltungen:
- EP-A- 0 043 931
- EP-A- 0 616 402
- DE-A- 1 949 673
- DE-U- 29 801 838
- FR-A- 2 452 811
- US-A- 4 959 018
- US-A- 5 162 616

## Beschreibung

Die Erfindung betrifft eine mehrphasige Stromsammelschiene zum Anschluß elektrischer Installationsgeräte gemäß dem Oberbegriff des Anspruches 1

Die DE-U1-29 801 838, EP-A1-0 616 402 und EP-A-0 043 931 offenbaren mehrphasige Stromsammelschienen nach dem Stand der Technik.

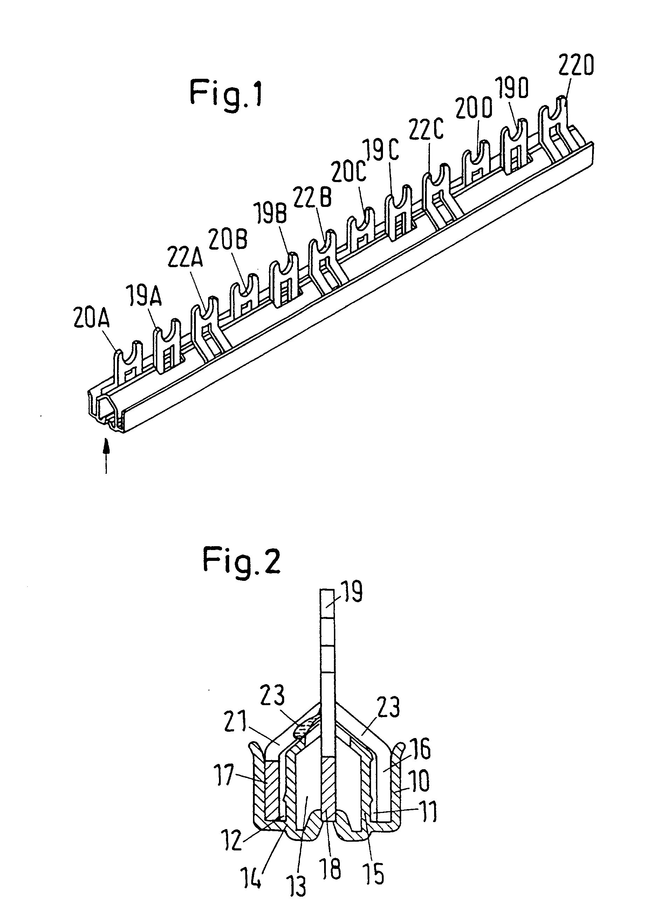

Aus den Fig. 1 bis 3 sind Stromsammelschienen ersichtlich, die an sich bekannt sind und schon lange eingesetzt werden. Die Fig. 1 zeigt eine perspektivische Ansicht und die Fig. 2 die Draufsicht einer solchen mehrphasigen Stromsammelschiene, mit einem Gehäuse 10, das drei Kammern 11, 12 und 13 aufweist, von denen die Kammern 12 und 13 bzw. 11 und 13 mittels Zwischenwänden 14 bzw. 15 voneinander getrennt sind. In die Kammern 11, 12 und 13 sind Flachbandleiter 16, 17 und 18 als Sammelschienen eingesetzt, von denen die mittleren Sammelschienen 18 mit geraden Anschlußfahnen 19A, 19B, 19C und 19D in einer Ebene mit der Sammelschiene bzw. dem Flachbandleiter 18 liegen. Die durch den Flachbandleiter 17 gebildete Sammelschiene besitzt Anschlußfahnen 20A, 20B, 20C und 20D, die in der Ebene der Anschlußfahnen 19A bis 19D liegen und mittels Verbindungsabschnitten 21 mit der Flachbandschiene 17 verbunden sind. In ähnlicher Weise sind die mit der Sammelschiene 16 verbundenen Anschlußfahnen 22A, 22B, 22C und 22D mit schräg verlaufenden Verbindungsabschnitten 23 mit der Sammelschiene 16 verbunden, damit die Anschlußfahnen ebenfalls in der Ebene der Anschlußfahnen 19A bis 19D; 20A bis 20D liegen.

Der Abstand der Flachbandleiter 16, 17 und 18 ist jeweils so gewählt, daß beim Ablängen, was durch Absägen erfolgt, eine Überbrückung zwischen den einzelnen Flachbandleitern 16 bis 18 verhindert ist bzw. ein minimal zulässiger Isolierabstand nicht unterschritten wird.

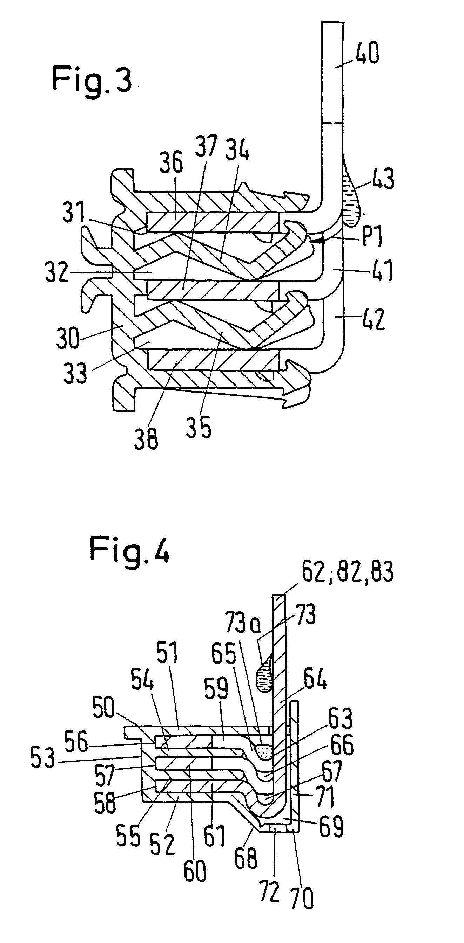

Bei der an sich bekannten Stromsammelschiene gemäß Fig. 3, die die Sammelschiene im Querschnitt zeigt, ist ebenfalls ein Isoliergehäuse 30 mit mehreren über- oder nebeneinanderliegenden Kammern 31, 32 und 33 vorgesehen, die mittels im Zickzack verlaufenden Trennwänden 34 und 35 voneinander getrennt sind. In den Kammern 31, 32 und 33 befinden sich Flachbandleiter 36, 37 und 38 als Stromsammelschienen, an denen Anschlußfahnen 40, 41 und 42 angeformt sind, die senkrecht zur Ebene der Flachbandleiter 36 bis 38 verlaufen; die Anschlußfahnen 40, 41 und 42 besitzen unterschiedliche Längen, damit die Installationsgeräte gleicher Phase miteinander mittels einer einzigen Stromsammelschiene verbunden werden können, so daß diese auf gleichem Potential liegen.

Bei beiden Anordnungen besteht das Problem, daß sich aufgrund atmosphärischer Einflüsse an den Anschlußfahnen 19, 20, 22 bzw. 40, 41, 42 Kondenswasser bilden kann, welches z. B. in Form eines Wassertropfens in die einzelnen Kammern fließen kann. Der in der Fig. 2 gezeigte Wassertropfen läuft auf der Außenfläche der Trennwand 14 in die Kammer 12 hinein; unter Umständen bildet dieser Wassertropfen eine Verbindung von der Sammelschiene 17 zur Sammelschiene 18, so daß hier ein Phasenkurzschluß auftreten kann.

Bei der Ausführung in Fig. 3 kann an einer Sammelschiene ein Wassertropfen 43 entstehen, der gemäß Pfeilrichtung P₁ in die Kammer 32 durch Kapillarwirkung hineingezogen werden kann, wodurch ebenfalls ein Phasenkurzschluß zwischen den Sammelschiene 36 und 37 oder den Sammelschienen 37 und 38 entstehen kann.

Aufgabe der Erfindung ist es, eine Lösung anzugeben, bei der verhindert ist, daß Kondenswasser zu einem Phasenkurzschluß führen kann.

Diese Aufgabe wird erfindungsgemäß gelöst durch die Merkmale des Anspruches 1.

Danach sind die Anschlußfahnen in vorteilhafter Weise über eine U-förmige Abkröpfung mit ihrem zugehörigen Flachbandleiter verbunden, dergestalt, daß jede Anschlußfahne je einen ersten Schenkel bildet und am anderen Schenkel senkrecht dazu die Flachbandleiter anschließen.

Da die offenen Seiten der U-Form nach oben weisen, insoweit, als die Anschlußfahnen in Einbaulage vertikal und die Flachbandleiter horizontal verlaufen, kann das an den Anschlußfahnen kondensierende Wasser nach unten in die U-Form hineinlaufen, ist aber daran gehindert, in die einzelnen Kammern des Isolierprofiles hinein gelangen und so einen Phasenkurzschluß zu erzeugen.

Entsprechend den - in Einbaulage - nach unten abgekröpften U-Formen ist die Au-βenwandung der den Anschlußfahnen entgegengesetzt liegenden Kammer des lsolierprofiles bzw. des Isoliergehäuses rillenförmig erweitert, so daß sich dort ein Kanal bildet, in dem in Einbaulage Kondenswasser sammelbar ist. Damit dieses Wasser auch abfließen kann, befinden sich an der tiefsten Stelle des Kanals Öffnungen, durch die das Kondenswasser in Einbaulage ablaufen kann.

Weitere vorteilhafte Ausgestaltungen und Verbesserungen der Erfindung sind den weiteren Unteransprüchen zu entnehmen.

Anhand der Zeichnung, in der einerseits der oben abgehandelte Stand der Technik mit dargestellt ist, sollen die Erfindung sowie weitere vorteilhafte Ausgestaltungen und Verbesserungen der Erfindung und weitere Vorteile näher erläutert und beschrieben werden.

Es zeigen:
- Fig. 1 bis 3: unterschiedliche Sammelschienen nach dem Stand der Technik,
- Fig. 4: eine Querschnittsansicht durch eine erfindungsgemäße Sammelschiene,
- Fig. 5 und 6: eine Sammelschiene gemäß der Erfindung in aufgeklapptem und geschlossenem Zustand, und
- Fig. 7 und 8: zwei perspektivische Ansichten je einer weiteren Ausführungsform einer erfindungsgemäßen Sammelschiene.

Es sei nun Bezug genommen auf die Fig. 4.

Die Fig. 4 stellt schematisch einen Querschnitt durch eine erfindungsgemäße Sammelschiene vor, die ein Isolierstoffgehäuse 50 aufweist, das zwei Endwände 51 und 52 besitzt, die eine U-Form mit einer Bodenwand 53 bilden; von der Bodenwand 53 aus springen Zwischenwände 54 und 55 vor, wodurch Kammern 56, 57 und 58 gebildet sind, in denen sich Flachbandleiter 59, 60 und 61 befinden, die mit Anschlußfahnen 62 versehen sind. Die weiteren Anschlußfahnen, diejenigen für die Flachbandleiter 60 und 61 sind in Fig. 4 verdeckt.

Alle diese Anschlußfahnen sind mit ihren zugehörigen Flachbandleitern 59 so verbunden, wie bei der sichtbaren Sammelschiene dargestellt: an dem Flachbandleiter 59 schließt sich eine U-Form 62 an, wobei der eine Schenkel 64 der U-Form in die Anschlußfahne 22 übergeht bzw. die Anschlußfahne 22 bildet, wogegen der andere Schenkel 65 mit dem etwa senkrecht dazu verlaufenden Flachbandleiter 59 verbunden ist. Die Anschlußfahnen der anderen Flachbandleiter 60 und 61 sind mit einer der U-From 63 entsprechenden U-Form 66 und 67 verbunden, die, wie aus Fig. 4 hervorgeht, entsprechend dem Abstand der Flachbandleiter 59, 60, 61 nach unten hin gestaffelt sind. Die U-Formen sind in eine Richtung geöffnet, die senkrecht zu den Ebenen der Flachbandleiter in Richtung der Anschlußfahnen verläuft.

Die untere Abschlußwand 52 besitzt eine rillenförmige Abkröpfung 68 mit einem - in Einbaulage - unterhalb der Wandung 52 befindlichen Kanalboden 70, an dessen freiem Ende ein senkrecht zu den Trennwänden 54 und 55 bzw. zu den Abschlußwänden 51 und 52 verlaufende Wandung 71 anschließt, die die obere Wand 51 deutlich übergreift, so daß die Bodenwandung 53 kleiner ist als die Abdeckwandung 71. Dadurch wird ein Kanal 69 gebildet, dessen Kanalboden 70 mit Öffnungen 72 versehen ist.

Wenn nun ein Wassertropfen 73 an der Anschlußfahne 62 entsteht, dann kann der Wassertropfen 73 in die U-Form 63 hineinlaufen; der dort punktiert gezeichnete Wassertropfen 73a kann auf den Kanalboden 70 abtropfen und durch die Öffnung 72 herausfließen. Auf diese Weise wird ein Phasenkurzschluß zwischen den einzelnen Sammelschienen bzw. Flachbandleitern unterschiedlicher Phase vermieden.

Alle Abschnitte des Isoliergehäuses 50 sind einstückig miteinander verbunden, so daß zur Montage die Sammelschienen in ihrer Längsrichtung in die Kammern 56, 57 und 58 hineingeschoben werden müssen.

Es ist selbstverständlich, daß die Trennwände 54 und 55 so gestaltet sind, daß ein ausreichender Abstand der Flachbandleiter 59, 60 und 61 sichergestellt ist.

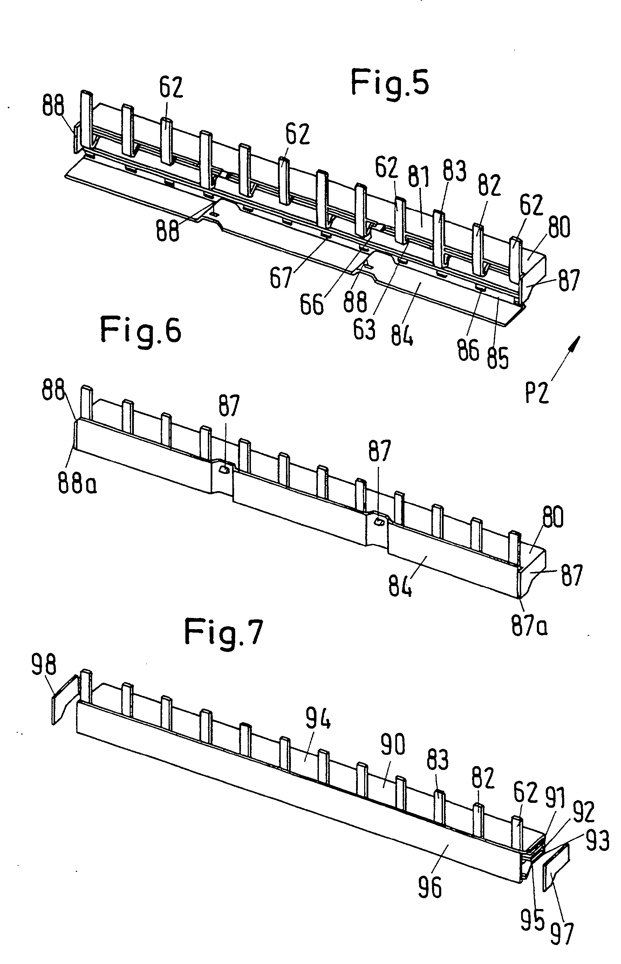

Es sei nun Bezug genommen auf die Fig. 5. In einem Isoliergehäuse 80 befinden sich übereinander angeordnet den Kammer 56 bis 58 entsprechende Kammern, die durch die obere Abschlußwand 81 abgedeckt sind, so daß sie nicht sichtbar sind. In die Kammern sind die Flachbandleiter 59, 60 und 61 hineingesteckt, die ebenfalls nicht sichtbar sind, und an denen die Anschlußfahnen 62, 82 und 83 angeformt sind, die in der Fig. 4 nicht sichtbar sind. Man erkennt aber wohl die einzelnen U-Formen der Anschlußfahnen, nämlich die U-Form 63 der Anschlußfahne 62, die U-Form 66 der Anschlußfahne 82 und die U-Form 67 der Anschlußfahne 83. Eine der Wand 71 entsprechende Klappe 84 ist mit der der unteren Wandung 52 entsprechenden Wandung, die in Fig. 5 nicht sichtbar ist, drehbar verbunden, wobei nicht näher dargestellte Gelenke vorgesehen sind, die z. B. durch ein Filmscharnier oder durch Einhängen der Abdeckklappe 84 in entsprechende Öffnungen erzeugt wird. Dabei besitzt die Klappe 84 eine senkrecht zur Klappenebene angeformte Leiste 85, in der Öffnungen 86 vorgesehen sind, die zum Abfließen evtl. Kondenswassers in gleicher Weise dienen wie die Öffnungen 72.

Da die Sammelschienen bzw. die Flachbandleiter in Pfeilrichtung P₂ in ihre Kammern hineingesetzt werden können, kann das Isoliergehäuse 80 schon von vornherein an den Stirnseiten mit einer senkrecht zu den Kammern 56 verlaufenden Abschlußwand 87 und 88, die einstückig mit dem Gehäuse 80 verbunden ist, abgeschlossen werden.

Die Fig. 6 zeigt die Anordnung gemäß Fig. 5 in verschlossener Form; die Klappe 84 ist senkrecht zu den Kammern und parallel zu den Anschlußfahnen hochgeklappt, wobei an der oberen Abschlußwand 81 angeformte Rastnasen 87 durch Öffnungen 88 in der Klappe 84 hindurchgreifen. Die Leiste 85 verläuft dann horizontal, so daß durch die Öffnungen 86 das Kondenswasser nach unten abfließen kann.

Die Fig. 7 zeigt eine weitere Ausgestaltung der Erfindung.

Die mehrphasige Sammelschiene besitzt ein Isoliergehäuse 90, dessen Kammern 91, 92 und 93 rechts sichtbar sind. In diese Kammern 91 bis 93, die den Kammern 56 bis 58 der Fig. 4 entsprechen, werden die Flachbandleiter hineingeschoben; die Anschlußfahnen 62, 82 und 83 überragen die obere Abdeckwand 94 des Isoliergehäuses 90. An der unteren Abschlußwand ist, in gleicher Weise wie in Fig. 4 dargestellt, eine der Wandung 71 entsprechende Wandung 96 angeformt, so daß die Flachbandleiter in ihrer Längsrichtung über eine der Stirnseiten in die Kammern 91 bis 93 hineingeschoben werden müssen. Nachdem die einzelnen Anschlußfahnen 62, 82 und 83 korrekt zueinander ausgerichtet sind, werden die offenen Stirnseiten mittels Abdeckplatten 97 und 98 verschlossen, deren Kontur der Umfangskontur des Isoliergehäuses 53 entspricht.

Aus der Fig. 6 ist ersichtlich, daß die Stirnwände 87 und 88 bzw. die Abdeckplatten 87 und 88 die Klappe 84 überragen, so daß die parallel zu den Anschlußfahnen verlaufenden Kanten 87a und 88a mit der äußeren Fläche der Klappe 84 fluchten. Die Abdeckplatten 97 und 98 können verrastet sein; es besteht auch die Möglichkeit, diese durch Ultraschallschweißen etc. zu befestigen.

Mit anderen Worten: die Anschlußfahnen 62, 82, 83 bilden mit den Flachbandleitern 59, 60 und 61 von der Stirnseite aus betrachtet eine U-Form 63, 66, 67 wobei die Flachbandleiter 59, 60, 61 als Schenkel senkrecht zu den Anschlußfahnen 62, 82, 83 ausgerichtet sind.

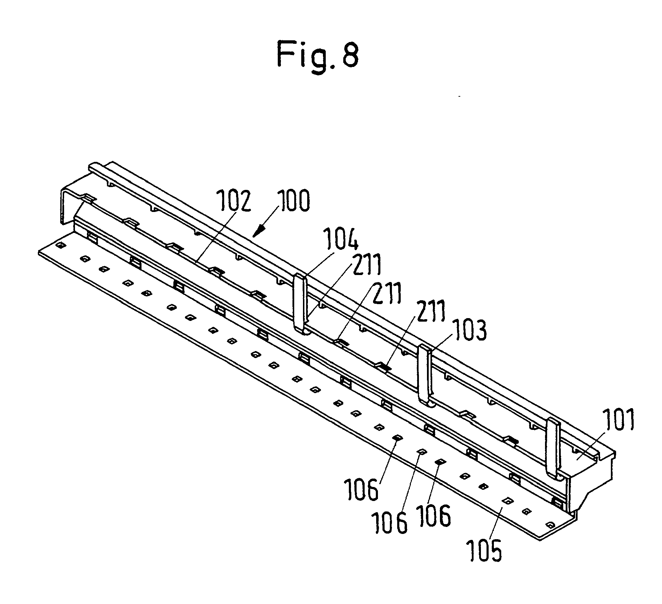

Die Fig. 8 zeigt eine perspektivische Darstellung einer mehrphasigen Sammelschiene 100, deren - in Einbaulage - obere Abschlußwand 101 an ihrer freien Kante 102 Aussparungen 211 aufweist, in die Anschlußfahnen 103 und 104 eingreifen und zur Fixierung der Flachbandleiter gegen Verschieben in ihrer Längsachse dienen. Die der Abdeckklappe 84 entsprechende Abdeckklappe 105 besitzt mehrere Öffnungen 106, durch die eine Belüftung der Sammelschiene möglich ist.

## Patentansprüche

1. Mehrphasige Stromsammelschiene zum Anschluß elektrischer Installationsgeräte, mit einem Flachbandleiter pro Phase, an dem Anschlußfahnen für die zugehörigen Installationsgeräte senkrecht zur Flachbandebene angeformt sind, und mit einem Isolierstoffgehäuse, in dem sich Kammern jeweils eines Flachbandleiters befinden, wobei die Kammern durch Trennwände voneinander getrennt sind, **dadurch gekennzeichnet, daß** die Anschlußfahnen über eine U-förmige Abkröpfung (63, 66, 67) mit den Flachbandleitern (59, 60, 61) verbunden sind, dergestalt, daß jede Anschlußfahne je einen ersten Schenkel bildet und am anderen Schenkel senkrecht zur Anschlußfahne die Flachbandleiter (59, 60, 61) anschließen.

2. Stromsammelschiene nach Anspruch 1, **dadurch gekennzeichnet, daß** die den Anschlußfahnen (62, 82, 83) entgegengesetzt liegende Abschlußwand (52, 95) des Isolierstoffgehäuses eine rillenförmige Anformung aufweist, wodurch ein Kanal (69) gebildet ist, dessen in Einbaulage untere Bodenwand Kondenswasser auffängt.

3. Stromsammelschiene nach Anspruch 2, **dadurch gekennzeichnet, daß** der Kanalboden (70) Öffnungen (72) aufweist, durch die in Einbaulage das Kondenswasser hindurch nach außen ablaufen kann.

4. Stromsammelschiene nach einem der vorherigen Ansprüche, **dadurch gekennzeichnet, daß** die Kammern von einer mit dem Kanalboden (70) verbundenen Wandung (71) abgedeckt ist, dergestalt, daß die Flachbandleiter zusammen mit den Anschlußfahnen zwischen der Abdeckwand (71) und den Kammerböden festgehalten sind.

5. Stromsammelschiene nach Anspruch 4, **dadurch gekennzeichnet, daß** die Abdeckwand (71) die Anschlußfahnen (62) zur Erzielung eines Berührungsschutzes überdeckt.

6. Stromsammelschiene nach einem der Ansprüche 4 oder 5, **dadurch gekennzeichnet, daß** die Abdeckwand (71) am Kanalboden (70) angeformt ist.

7. Stromsammelschiene nach einem der Ansprüche 4 oder 5, **dadurch gekennzeichnet, daß** die Abdeckwand (84) drehbar am Kanalboden (70) angelenkt und im zugeklappten Zustand mit der den Anschlußfahnen benachbarten Außenwand des Isoliergehäuses (50) verrastbar oder verschweißbar ist.

8. Stromsammelschiene nach Anspruch 7, **dadurch gekennzeichnet, daß** an der drehbar angeordneten Abdeckwand (84) eine senkrecht dazu vorspringende Leiste angeformt ist, die in Einbauzustand mit dem Kanalboden fluchtet, und daß in der Leiste Abfließöffnungen (86) eingebracht sind.

9. Sammelschiene nach einem der vorherigen Ansprüche, **dadurch gekennzeichnet, daß** die Stirnseiten des Isoliergehäuses (18) mit einer Abdeckplatte (87, 88) verschlossen sind.

10. Sammelschiene nach Anspruch 9, **dadurch gekennzeichnet, daß** die Abdeckplatten (87, 88) am Isoliergehäuse (80) angeformt sind.

11. Sammelschiene nach Anspruch 9, **dadurch gekennzeichnet, daß** die Abdeckplatten (97, 98 mit den offenen Stirnseiten durch Verrasten oder durch Verschweißung verbunden sind.

## Claims

1. A multiphase electric busbar for the connection of electric installation devices, comprising one ribbon conductor per phase, to which are attached terminal lugs for the associated installation devices perpendicular to the ribbon conductor plane, and an insulating material housing, in which chambers of one ribbon conductor each are situated, with the chambers being separated from each other by separating walls, **characterized in that** the terminal lugs are connected with the ribbon conductors (59, 60, 61) via U-shaped bend (63, 66, 67), such that each terminal lug forms a first leg each and the ribbon conductors (59, 60, 61) are connected to the other leg perpendicular to the terminal lug.

2. An electric busbar according to claim 1, **characterized in that** the boundary wall (52, 95) of the insulating housing which is situated opposite of the terminal lugs (62, 82, 83) comprises a groove-like attachment, thus forming a channel (69) whose floor wall which is at the bottom in the installed position catches condensate.

3. An electric busbar according to claim 2, **characterized in that** the.channel floor (70) comprises openings (72) through which the condensate can discharge to the outside in the installed position.

4. An electric busbar according to one of the preceding claims, **characterized in that** the chambers of a wall (71) connected with the channel floor (70) is covered in such a way that the ribbon conductors are fixed together with the terminal lugs between the cover wall (71) and the chamber floors.

5. An electric busbar according to claim 4, **characterized in that** the cover wall (71) covers the terminal lugs (62) to achieve protection against accidental contact.

6. An electric busbar according to one of the claims 4 or 5, **characterized in that** the cover wall (71) is formed on the channel floor (70).

7. An electric busbar according to one of the claims 4 or 5, **characterized in that** the cover wall (84) is linked rotatably to the channel floor (70) and can be latched or welded together in the closed state with the outside wall of the insulating housing (50) adjacent to the terminal lugs.

8. An electric busbar according to claim 7, **characterized in that** a strip is formed on the rotatably arranged cover wall (84), which strip projects perpendicularly from the same and is in alignment with channel floor in the installed state, and that discharge openings (86) are incorporated in the strip.

9. An electric busbar according to one of the preceding claims, **characterized in that** the face sides of the insulating housing (18) are sealed with a cover plate (87, 88).

10. An electric busbar according to claim 9, **characterized in that** the cover plates (87, 88) are formed on the insulating housing (80).

11. An electric busbar according to claim 9, **characterized in that** the cover plates (97, 98) are joined to the open face sides by latching or welding.

## Revendications

1. Barre omnibus électrique multiphases pour le raccordement d'appareils électriques dans une installation, avec un câble plat par phase, dont les barrettes de connexion pour les appareils de l'installation correspondants sont formées perpendiculairement au plan du câble plat, et avec un boîtier en matériau isolant dans lequel un compartiment est formé pour chaque câble plat, dans laquelle les compartiments sont séparés les uns des autres par des cloisons, **caractérisée en ce que** les barrettes de connexion sont reliées par un coude en U (63, 66, 67) aux câbles plats (59, 60, 61) de telle manière que chaque barrette de connexion forme un premier bras et que les câbles plats (59, 60, 61) se raccordent à l'autre bras perpendiculairement à la barrette de connexion.

2. Barre omnibus électrique selon la revendication 1, **caractérisée en ce que** la paroi de fermeture (52, 95) du boîtier en matériau isolant opposée aux barrettes de connexion (62, 82, 83) possède un relief nervuré, qui forme un canal (69) dont la paroi de fond inférieure dans la position de montage recueille l'eau de condensation.

3. Barre omnibus électrique selon la revendication 2, **caractérisée en ce que** le fond du canal (70) présente des ouvertures (72) à travers lesquelles l'eau de condensation peut s'écouler vers l'extérieur dans la position de montage.

4. Barre omnibus électrique selon l'une quelconque des revendications précédentes, **caractérisée en ce que** les compartiments sont couverts par une paroi (71) reliée au fond du canal (70), de telle manière que les câbles plats et les barrettes de connexion soient retenus entre la paroi de couverture (71) et les fonds de compartiment.

5. Barre omnibus électrique selon la revendication 4, **caractérisée en ce que** la paroi de couverture (71) recouvre les barrettes de connexion (62) de façon à empêcher de les toucher.

6. Barre omnibus électrique selon l'une quelconque des revendications 4 ou 5, **caractérisée en ce que** la paroi de couverture (71) est formée sur le fond du canal (70).

7. Barre omnibus électrique selon l'une quelconque des revendications 4 ou 5, **caractérisée en ce que** la paroi de couverture (84) est articulée de façon pivotante sur le fond du canal (70) et, lorsqu'elle est fermée, peut être emboîtée ou soudée à la paroi extérieure du boîtier en matériau isolant (50) voisine des barrettes de connexion.

8. Barre omnibus électrique selon la revendication 7, **caractérisée en ce qu'**il est prévu formée sur la paroi de couverture (84) pivotante une bande faisant saillie perpendiculairement à celle-ci, qui est alignée avec le fond du canal dans l'état de montage, et **en ce que** des ouvertures d'écoulement (86) sont ménagées dans la bande.

9. Barre omnibus selon l'une quelconque des revendications précédentes, **caractérisée en ce que** les faces frontales du boîtier isolant (18) sont fermées par une plaque de couverture (87, 88).

10. Barre omnibus selon la revendication 9, **caractérisée en ce que** les plaques de couverture (87, 88) sont moulées sur le boîtier isolant (80).

11. Barre omnibus selon la revendication 9, **caractérisée en ce que** les plaques de couverture (97, 98) sont reliées aux faces frontales ouvertes par emboîtement ou par soudage.
